# EUROPEAN PATENT SPECIFICATION

(11) **EP 4 645 526 B1**
(45) Date of publication and mention of the grant of the patent: **02.12.2026**
(21) Application number: 24199501.8
(22) Date of filing: 10.09.2024
(51) Int. Cl.: H01M 10/643, H01M 10/6555, H01M 50/209, H01M 50/213, H01M 50/242, H01M 50/26

(54) **BATTERY PACK**
BATTERIEPACK
BLOC-BATTERIE

(30) Priority: 30.04.2024 CN 202420950380 U
(43) Date of publication of application: 05.11.2025
(60) Divisional application: 26212152.8 / 4 848 441
(73) Proprietor: Eve Energy Co., Ltd., Huizhou, Guangdong 516006 (CN)
(72) Inventor: LIAO, Xuxia, Huizhou, Guangdong, 516006 (CN); ZHANG, Guojiang, Huizhou, Guangdong, 516006 (CN)
(74) Representative: Herrero & Asociados, S.L.

(56) References cited:
- EP-A1- 4 181 298
- EP-A1- 4 184 686
- EP-A1- 4 310 994
- US-A1- 2023 261 315

## Description

### TECHNICAL FIELD

The present disclosure relates to the field of batteries, and in particular to a battery pack.

### BACKGROUND

In the art, a discharging end of a cell-power battery group is generally covered by a resin plate to achieve insulation and flame retardant and to improve rigidity. EP4310994A1 describes a battery pack comprising an outer housing that defines a receiving cavity and a battery group received within this cavity. The document discloses the general structure of a battery pack and the arrangement of its main components. However, it does not describe the reinforcing layer being wrapped by the adhesive.

### SUMMARY OF THE DISCLOSURE

In the art, a positioning structure is to be arranged to assemble the resin plate to the battery group, such that difficulty in configuration of the battery group is improved, and an assembling process is time-consumed and labor-intensive.

The present disclosure provides a battery pack, including: an outer housing, a battery group, at least one reinforcing layer, and a fixation adhesive. The outer housing defines a receiving cavity. The battery group is received in the receiving cavity. The at least one reinforcing layer is disposed at a discharging end of the battery group. The at least one reinforcing layer defines a plurality of channel holes. The fixation adhesive is filled in the receiving cavity. The fixation adhesive wraps the reinforcing layer and the battery group.

According to the present disclosure, a fixation adhesive is arranged to fix the reinforcing layer and the battery group. In this way, a fixation structure for the reinforcing layer is eliminated, difficulty in configuration of the battery pack is reduced, and the assembling process of the battery pack is simplified. A manufacturing efficiency is improved, and costs for the battery pack are reduced. In addition, the fixation adhesive fixes the reinforcing layer and the battery group in all directions, a fixing effect of the reinforcing layer and the battery group is improved. By defining channel holes in the reinforcing layer, the fixation adhesive flows through the channel holes to enter the gap between the reinforcing layer and the battery group. In this way, the fixation adhesive fully and uniformly fills the space between the reinforcing layer and the battery group, such that performance of the battery pack is more stable.

### BRIEF DESCRIPTION OF THE DRAWINGS

FIG. 1 is a cross-sectional view of a battery pack, taken along a first plane, according to some embodiments of the present disclosure.
FIG. 2 is a cross-sectional view of the battery pack, taken along a second plane perpendicular to the first plane, according to some embodiments of the present disclosure.
FIG. 3 is a planar schematic view of a reinforcing layer shown in FIG. 1.
FIG. 4 is a process of filling a fixation adhesive into an outer housing shown in FIG. 2.
FIG. 5 is a cross-sectional view of the battery pack according to another embodiment of the present disclosure.
FIG. 6 is a flow chart of a method of preparing the battery pack according to some embodiments of the present disclosure.

Reference numerals in the drawings: 100, battery pack; 10, outer housing; 12, receiving cavity; 14, case; 20, battery group; 30, reinforcing layer; 31, lateral portion; 32, channel hole; 33, vertical portion; 40, fixation adhesive; 50, upper cover; 60, connection member.

### DETAILED DESCRIPTION

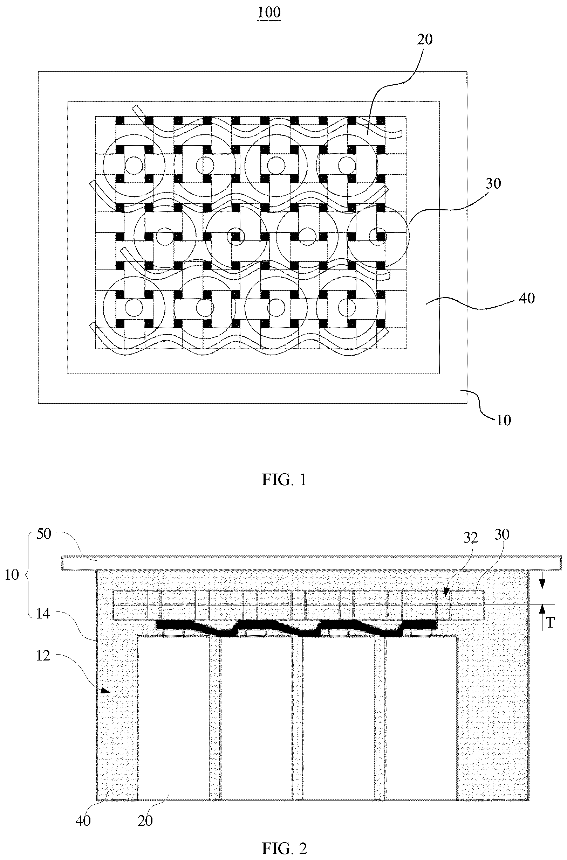

As shown in FIGS. 1 and 2, FIG. 1 is a cross-sectional view of a battery pack 100, taken along a first plane, according to an embodiment of the present disclosure; and FIG. 2 is a cross-sectional view of the battery pack 100, taken along a second plane perpendicular to the first plane, according to an embodiment of the present disclosure. Embodiments of the present disclosure provide the battery pack 100. The battery pack 100 includes an outer housing 10, a battery group 20, a reinforcing layer 30, and a fixation adhesive 40. The outer housing 10 defines a receiving cavity 12. The battery group 20 is received in the receiving cavity 12. The reinforcing layer 30 is disposed at a discharging end of the battery group 20. The reinforcing layer 30 defines channel holes 32. The fixation adhesive 40 is filled in the receiving cavity 12. The fixation adhesive 40 wraps the reinforcing layer 30 and the battery pack 20.

Specifically, an interior of the outer housing 10 is hollow, such that the outer housing 10 forms the receiving cavity 12 having at least one opening. The battery group 20 may be directly placed in the receiving cavity 12 or fixed in the receiving cavity 12 by a fixation structure. The battery group 20 includes a plurality of cells arranged in an array. The plurality of cells are electrically connected to each other in series, or in parallel, or both in series and in parallel. Each cell may be a lithium cell, a sodium cell, a lead-acid cell, and so on. The cell is configured to store and release electric power. By disposing the reinforcing layer 30 at the discharging end of the battery group 20, on the one hand, rigidity of the battery group 20 is improved; and on the other hand, insulation and flame retardant may be achieved. The fixation adhesive 40 fills the receiving cavity 12 and wraps the reinforcing layer 30 and the battery group 20. In the present embodiment, the reinforcing layer 30 and the battery group 20 are fixed by the fixation adhesive 40. In this way, a fixation structure for the reinforcing layer 30 is eliminated, the difficulty in the configuration of the battery pack 100 is reduced, and the assembling process of the battery pack 100 is simplified. The manufacturing efficiency is improved, and costs for the battery pack are reduced. In addition, the fixation adhesive fixes the reinforcing layer and the battery group in all directions, a fixing effect of the reinforcing layer 30 and the battery group 20 is improved. In the embodiment, by defining the channel holes 32 in the reinforcing layer 30, the fixation adhesive 40 flows through the channel holes 32 to enter the gap between the reinforcing layer 30 and the battery group 20. In this way, the fixation adhesive 40 fully and uniformly fills the space between the reinforcing layer 30 and the battery group 20, such that performance of the battery pack 100 is more stable.

As shown in FIG. 2, in the present embodiment, the outer housing 10 includes a case 14 and an upper cover 50. The upper cover 50 is connected to the case 14 to form the receiving cavity 12. The reinforcing layer 30 is disposed between the battery group 20 and the upper cover 50.

Specifically, the opening of the receiving cavity 12 is defined at a top of the case 14. The upper cover 50 covers the opening of the receiving cavity 12 to seal the receiving cavity 12. By configuring the outer housing 10 as the case 14 and the upper cover 50 separatable from the case 14, the fixation adhesive 40 may be easily filled into the receiving cavity 12, such that the fixation adhesive 40 fills the space between the reinforcing layer 30 and the battery group 20 more uniformly, facilitating assembling of the battery group 20 and the reinforcing layer 30.

In an embodiment, since a resin plate needs to be processed and molded. When the resin plate is used, serving as the reinforcing layer 30, a production cost of the reinforcing layer 30 is high. Therefore, the reinforcing layer 30 in the present embodiment may be made of at least one of: a glass fiber cloth, a carbon fiber cloth, and an aramid cloth. Using the glass fiber cloth, instead of the resin plate, may effectively reduce the cost.

Specifically, the glass fiber cloth may be used to serve as the reinforcing layer 30 in the present embodiment. During assembling, the glass fiber cloth may be laminated on the discharging end of the battery group 20, and a gel may be filled into the receiving cavity 12 of the outer housing 10. The fixation adhesive 40, which wraps the reinforcing layer 30 and the battery group 20, may be formed after the gel is solidified. Since the glass fiber cloth covered by the fixation adhesive 40 has a high strength, the glass fiber cloth may improve the rigidity of the battery pack 100.

In some embodiments, any two materials, from the glass fiber cloth, the carbon fiber cloth, and the aramid cloth, may be used at the same time to serve as the reinforcing layer 30. Alternatively, the glass fiber cloth, the carbon fiber cloth, and the aramid cloth may be used at the same time to serve as the reinforcing layer 30, such that various performance requirements may be met.

For a cell encapsulation process in the art, a Styrofoam may be used to fill and seal the battery pack 100. Therefore, the fixation adhesive 40 of the present embodiment may be made of Styrofoam. In this way, the styrofoam process in the art may be applied to the present disclosure to simplify the structural configuration and the assembling process of the battery pack 100.

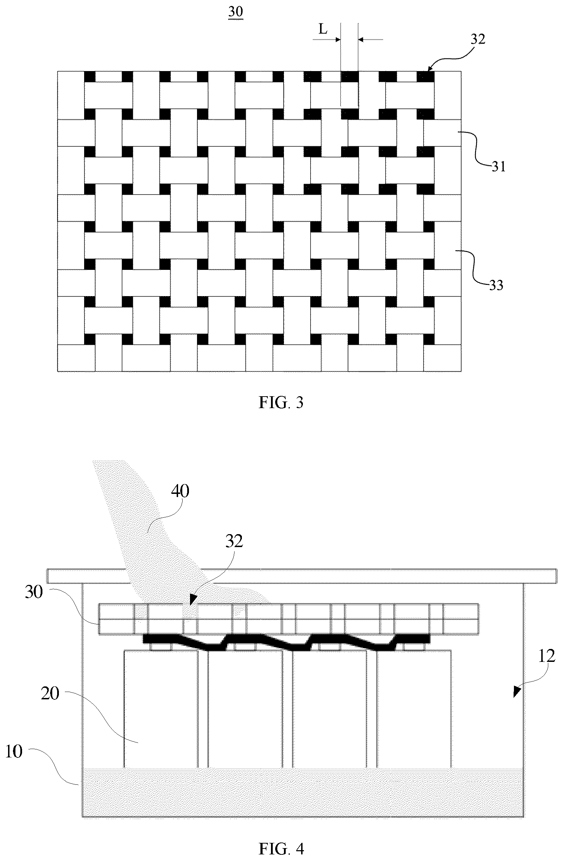

In an embodiment, as shown in FIGS. 1, 3, and 4, FIG. 3 is a planar schematic view of the reinforcing layer 30 shown in FIG. 1; and FIG. 4 is a process of filling the fixation adhesive 40 into the outer housing 10 shown in FIG. 2. The reinforcing layer 30 includes a plurality of lateral portions 31 and a plurality of vertical portions 33. The plurality of lateral portions 31 and the plurality of vertical portions 33 intersect with each other. Two of the plurality of lateral portions 31 and two of the plurality of vertical portions 33 intersect with each other to cooperatively define a respective one of the plurality of channel holes 32 indicated as a black area in FIG. 3. The channel holes 32 are defined to provide infiltration channels for the fixation adhesive 40 to flow through. When the fixation adhesive 40 is filled into the receiving cavity 12 through the opening of the receiving cavity 12, the fixation adhesive 40 may enter, through the infiltration channels, a side of the fiber glass cloth facing the battery group 20, such that the fiber glass cloth is soaked. The fixation adhesive 40 that enters the side of the fiber glass cloth facing the battery group 20 may completely wrap the fiber glass cloth after the filling. In this case, the fiber glass cloth serves as a backbone to enhance the rigidity of the battery pack 100, and the fixation adhesive 40 may fix the fiber glass cloth stably on the battery group 20.

In an embodiment, as shown in FIG. 3, each lateral portion 31 and each vertical portion 33 are perpendicular to each other. By applying a 0° and 90° direction weaving process, when the glass fiber cloth is subjected to a force perpendicular to a plane in which the glass fiber cloth is located, the force may be evenly dispersed in two perpendicular directions, such that a stress is prevented from being concentrated.

Alternatively, in other embodiments, a certain angle may be formed between the lateral portion 31 and the vertical portion 33. For example, the angle between the lateral portion 31 and the vertical portion 33 may be 30°, 45°, 60°, or 75°, and so on. The angle may be determined flexibly according to demands and will not be specifically limited herein.

In an embodiment, as shown in FIG. 3, a width of the channel hole 32 may be L millimeters, where L ≥ 1. Specifically, as shown in FIG. 3, in the case where the lateral portions 31 and the vertical portions 33 are perpendicular to each other, the width of the channel hole 32 refers to a length of a gap between two adjacent lateral portions 31 or a length of a gap between two adjacent vertical portions 33. In a case where the length of the gap between the two adjacent lateral portions 31 is unequal to the length of the gap between the two adjacent vertical portions 33, the width of the channel hole 32 refers to a smaller one of the two lengths. By arranging the width of the channel hole 32 to be greater than or equal to 1 millimeter, the rigidity of the reinforcing layer 30 is ensured, fluidity of the fixation adhesive 40 in the channel hole 32 is also ensured, such that the fixation adhesive 40 may easily enter the side of the reinforcing layer 30 facing the battery group 20.

In an embodiment, the width of the channel hole 32 may be, such as, 1 mm, 1.2 mm, 1.4 mm, 1.6 mm, 1.8 mm, 2 mm, 2.5 mm, 3 mm, 4 mm, 5 mm, 6 mm, 7 mm, 8 mm, 9 mm, or 10 mm, and so on, which will not be enumerated herein.

In an embodiment, a thickness of the reinforcing layer 30 may be T millimeters, where 1 ≤ T ≤ 2. Specifically, as shown in FIG. 2, the thickness of the reinforcing layer 30 refers to a height of the reinforcing layer 30 in a plane perpendicular to the plane in which the reinforcing layer 30 is located. Since the thickness of the reinforcing layer 30 is greater than or equal to 1 millimeter and less than or equal to 2 millimeters, the reinforcing layer 30 may be relatively thick. In this way, the reinforcing layer 30 may have higher strength after being wrapped by the fixation adhesive 40, and furthermore, the gap between the upper cover 50 of the outer housing 10 and the battery group 20 may be filled.

In an embodiment, the thickness of the reinforcing layer 30 may be, such as, 1 mm, 1.1 mm, 1.2 mm, 1.3 mm, 1.4 mm, 1.5 mm, 1.6 mm, 1.7 mm, 1.8 mm, 1.9 mm, or 2 mm, and so on, which will not be enumerated herein.

In an embodiment, in order to meet various demands for the product, for example, different battery packs 100 may be required to have different levels of rigidity, and various demands may be made for gaps between the upper cover 50 and the battery group 20 in different battery packs 100, the number of reinforcing layers 30 may be two or three. The two or three reinforcing layers 30 may be laminated and disposed at the discharging end of the battery group 20. Channel holes 32 in the two or three reinforcing layers 30 are communicated to each other. In this way, by laminating various numbers of reinforcing layers 30, the reinforcing layers 30 may have various levels of rigidity, and the gap between the upper cover 50 and the battery group 20 may be reasonably filled, the difficulty in the configuration of the battery pack 100 is reduced, and the assembling efficiency is improved.

As shown in FIG. 2, in the present embodiment, the battery pack 100 has two reinforcing layers 30. The two reinforcing layers 30 are laminated. The channel holes 32 defined in the two reinforcing layers 30 are aligned to each other, such that the channel holes 32 in the two reinforcing layers 30 are communicated to each other, facilitating the fixation adhesive 40 to flow through the channel holes 32.

On the other hand, the thickness of the reinforcing layer 30 in the present embodiment is greater than or equal to 1 millimeter and less than or equal to 2 millimeters. In this way, the reinforcing layer 30 have a relatively large thickness, the number of laminated reinforcing layers 30 may be reduced, interlayer separation between adjacent reinforcing layers 30 may be avoided.

In the present disclosure, performance of a material compositing from the glass fiber cloth and the styrofoam and performance of the styrofoam alone are tested, and details of the test are shown in Table 1.

**Table 1**

| Test items | Test criterio n | thickne ss | Test method | Performance of Styrofoam | | performance of a material compositing from the glass fiber cloth and the styrofoam | |
|---|---|---|---|---|---|---|---|
| | | | | pressure/M Pa | strains/ % | pressure/M Pa | strain s /% |
| tensile | GB-T528 | 3T | Running speed of the device: 10mm/min | 3 | 10 | 48.4 | 21.9 |
| Bending performan ce | GB-T9341 | | Running speed of the device:2mm/ min | / | | 37.2 | 2.7 |

As can be seen from Table 1, the tensile and the bending performance of the material compositing from the glass fiber cloth and the styrofoam are greatly improved, such that an overall mechanical performance of the reinforcing layer is greatly improved.

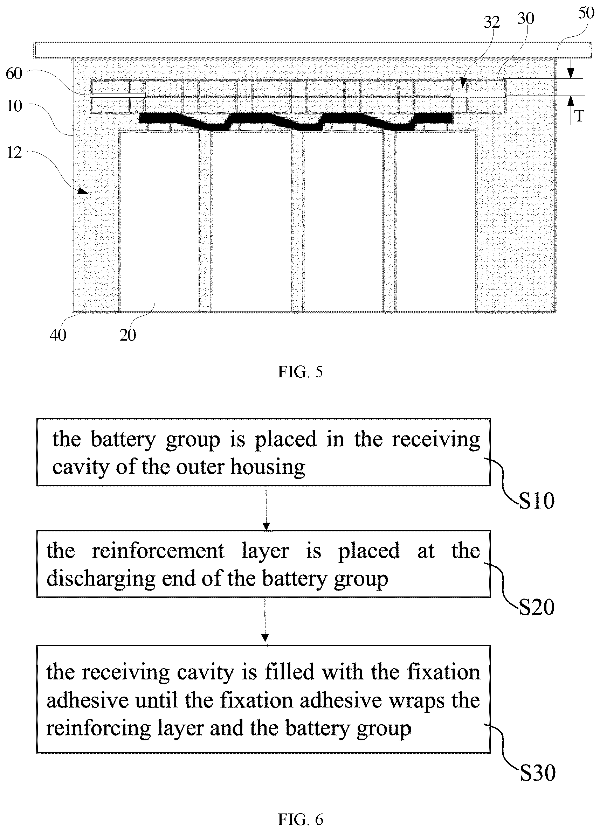

Generally, friction between the reinforcing layers 30 may reduce the interlayer separation between the two adjacent reinforcing layers 30. Therefore, a plurality of reinforcing layers 30 may be directly laminated, such that difficulty in configuration of the reinforcing layers 30 is reduced, and the assembling process of the battery pack 100 is simplified. In other embodiments, in order to prevent the interlayer separation between the two adjacent reinforcing layers 30, as shown in FIG. 5, which is a cross-sectional view of the battery pack according to another embodiment of the present disclosure, the battery pack 100 further includes a connection member 60. The connection member 60 connects two or three reinforcing layers 30 with each other. By arranging the connection member 60, the plurality of reinforcing layers 30 are fixed to form a one-piece structure, preventing interlayer separation between the two adjacent reinforcing layers 30, due to the two adjacent reinforcing layers 30 moving relative to each other, such that structural stability of the plurality of reinforcing layers 30 is improved.

The connection member 60 may be a screw. The screw may be inserted in the reinforcing layers 30 to connect the adjacent reinforcing layers 30 to each other. Alternatively, the connection member 60 may be a double-sided adhesive, and the double-sided adhesive is disposed between the two adjacent reinforcing layers 30 to bond the two adjacent reinforcing layers 30 to each other. Alternatively, the connection member 60 may be other types of connection structures that are commonly used, which are not specifically limited herein.

As shown in FIGS. 1 to 5 and FIG. 6, FIG. 6 is a flow chart of a method of preparing the battery pack according to an embodiment of the present disclosure. The method of preparing the battery pack 100 includes following operations.

In an operation S10, the battery group 20 is placed in the receiving cavity 12 of the outer housing 10.

Specifically, the plurality of cells are first electrically connected to each other in series, or in parallel, or both in series and in parallel, to form the battery group 20. Subsequently, the battery group 20 is placed in the receiving cavity 12 through the opening of the receiving cavity 12 of the outer housing 10. The discharging end of the battery group 20 is placed to face towards the opening.

In an operation S20, the reinforcement layer 30 is placed at the discharging end of the battery group 20.

After placing the battery group 20 in the receiving cavity 12, the reinforcing layer 30 is laid directly flat at the discharging end of the battery group 20. When the plurality of reinforcing layers 30 are required, the plurality of reinforcing layers 30 may be laminated in sequence, and the channel holes 32 in one of the plurality of reinforcing layers 30 may be aligned to the channel holes 32 in another one of the plurality of reinforcing layers 30. When the plurality of reinforcing layers 30 need to be connected to each other by using the connection member 60, the plurality of reinforcing layers 30 are connected to each other by the connection member 60 firstly, and subsequently, the plurality of reinforcing layers 30 are placed at the discharging end of the battery group 20.

In an operation S30, the receiving cavity 12 is filled with the fixation adhesive 40 until the fixation adhesive 40 wraps the reinforcing layer 30 and the battery group 20.

After the reinforcing layer 30 is disposed on the battery group 20, the fixation adhesive 40 is filled into the reviving cavity 12 through the opening of the reviving cavity 12. A portion of the fixation adhesive 40 enters the reviving cavity 12 through the gap between the outer housing 10 and the battery group 20, and another portion of the fixation adhesive 40 enters the gap between the battery group 20 and the reinforcing layer 30 through the channel holes 32 as shown in FIG. 4. In this way, the battery group 20 and the reinforcing layer 30 are completely wrapped.

In summary, the reinforcing layer 30 and the battery group 20 are fixed by the fixation adhesive 40. In this way, a fixation structure for the reinforcing layer 30 is eliminated, the difficulty in the configuration of the battery pack 100 is reduced, and the assembling process of the battery pack 100 is simplified. The manufacturing efficiency is improved, and costs for the battery pack are reduced. In addition, the fixation adhesive 40 fixes the reinforcing layer 30 and the battery group 20 in all directions, a fixing effect of the reinforcing layer 30 and the battery group 20 is improved. In addition, by defining the channel holes 32 in the reinforcing layer 30, the fixation adhesive 40 flows through the channel holes 32 to enter the gap between the reinforcing layer 30 and the battery group 20. In this way, the fixation adhesive 40 fully and uniformly fills the space between the reinforcing layer 30 and the battery group 20, such that performance of the battery pack 100 is more stable.

## Claims

1. A battery pack, comprising:
an outer housing (10), defining a receiving cavity (12);
a battery group (20), received in the receiving cavity (12);
at least one reinforcing layer (30), disposed at a discharging end of the battery group (20), wherein the at least one reinforcing layer (30) defines a plurality of channel holes (32); and
a fixation adhesive (40), filled in the receiving cavity (12), wherein the fixation adhesive (40) wraps the reinforcing layer (30) and the battery group (20).

2. The battery pack according to claim 1, wherein, each of the at least one reinforcing layer (30) comprises at least one of: a glass fiber cloth, a carbon fiber cloth, and an aramid cloth.

3. The battery pack according to claim 2, wherein, when each of the at least one reinforcing layer (30) comprises the glass fiber cloth, the fixation adhesive (40) enters a side of the glass fiber cloth facing the battery group (20).

4. The battery pack according to claim 3, wherein, the fixation adhesive (40) wraps the entirety of the glass fiber cloth and fixes the glass fiber cloth to the battery group (20).

5. The battery pack according to claim 1, wherein each of the at least one reinforcing layer (30) comprises a plurality of lateral portions (31) and a plurality of vertical portions (33), the plurality of lateral portions (31) and the plurality of vertical portions (33) intersect with each other, two adjacent lateral portions (31) of the plurality of lateral portions (31) and respective two adjacent vertical portions (33) of the plurality of vertical portions (33) cooperatively define a respective one of the plurality of channel holes (32).

6. The battery pack according to claim 5, wherein each of the plurality of lateral portions (31) and each of the plurality of vertical portions (33) are perpendicular to each other.

7. The battery pack according to claim 5, wherein a width of each of the plurality of channel holes (32) is L mm, and the L ≥ 1.

8. The battery pack according to claim 1, wherein a thickness of the reinforcing layer (30) is T millimeters, and 1 ≤ T ≤ 2.

9. The battery pack according to claim 8, wherein the number of the at least one reinforcing layer (30) is more than one, the more than one reinforcing layers (30) are laminated at the discharging end of the battery group (20), the channel holes (32) defined in one of the more than one reinforcing layers (30) are communicated to the channel holes (32) defined in another one of the more than one reinforcing layers (30).

10. The battery pack according to claim 9, wherein, each channel hole (32) defined in one of the more than one reinforcing layers (30) is aligned with a respective one of the channel holes (32) defined in another one of the more than one reinforcing layers (30).

11. The battery pack according to claim 9, further comprising a connection member (60), wherein the connection member (60) connects the more than one reinforcing layers (30) to each other.

12. The battery pack according to any one of claims 1 to 11, wherein, the fixation adhesive (40) is made of Styrofoam.

13. The battery pack according to any one of claims 1 to 11, wherein, the outer housing (10) comprises a case (14) and an upper cover (50), the upper cover (50) and the case (14) are connected to each other to cooperatively form the receiving cavity (12), the reinforcing layer (30) is disposed between the battery group (20) and the upper cover (50).

## Patentansprüche

1. Ein Batteriepack, umfassend:
ein Außengehäuse (10), das einen Aufnahmehohlraum (12) definiert;
eine Batteriegruppe (20), die in dem Aufnahmehohlraum (12) aufgenommen ist;
mindestens eine Verstärkungsschicht (30), die an einem Entladeende der Batteriegruppe (20) angeordnet ist, wobei die mindestens eine Verstärkungsschicht (30) eine Vielzahl von Durchgangsöffnungen (32) aufweist; und
einen Fixierklebstoff (40), der in den Aufnahmehohlraum (12) eingefüllt ist, wobei der Fixierklebstoff (40) die Verstärkungsschicht (30) und die Batteriegruppe (20) umhüllt.

2. Das Batteriepack gemäß Anspruch 1, wobei jede der mindestens einen Verstärkungsschichten (30) mindestens eines der folgenden Gewebe umfasst: ein Glasfasergewebe, ein Kohlefasergewebe und ein Aramidgewebe.

3. Das Batteriepack gemäß Anspruch 2, wobei der Fixierklebstoff (40), wenn jede der mindestens einen Verstärkungsschichten (30) das Glasfasergewebe umfasst, auf eine der Batteriegruppe (20) zugewandte Seite des Glasfasergewebes gelangt.

4. Das Batteriepack gemäß Anspruch 3, wobei der Fixierklebstoff (40) das gesamte Glasfasergewebe umhüllt und das Glasfasergewebe an der Batteriegruppe (20) fixiert.

5. Das Batteriepack gemäß Anspruch 1, wobei jede der mindestens einen Verstärkungsschichten (30) eine Vielzahl von Querabschnitten (31) und eine Vielzahl von Vertikalabschnitten (33) umfasst, wobei sich die Vielzahl von Querabschnitten (31) und die Vielzahl von Vertikalabschnitten (33) miteinander kreuzen, wobei zwei benachbarte Querabschnitte (31) der Vielzahl von Querabschnitten (31) und jeweils zwei entsprechende benachbarte Vertikalabschnitte (33) der Vielzahl von Vertikalabschnitten (33) gemeinsam jeweils eine der Vielzahl von Durchgangsöffnungen (32) definieren.

6. Das Batteriepack gemäß Anspruch 5, wobei jeder Querabschnitt (31) der Vielzahl von Querabschnitten (31) senkrecht zu jedem Vertikalabschnitt (33) der Vielzahl von Vertikalabschnitten (33) verläuft.

7. Das Batteriepack gemäß Anspruch 5, wobei jede der Vielzahl von Durchgangsöffnungen (32) eine Breite von L mm aufweist und L ≥ 1 gilt.

8. Das Batteriepack gemäß Anspruch 1, wobei die Verstärkungsschicht (30) eine Dicke von T Millimetern aufweist und 1 ≤ T ≤ 2 gilt.

9. Das Batteriepack gemäß Anspruch 8, wobei die Anzahl der Verstärkungsschichten (30) größer als eins ist, die mehreren Verstärkungsschichten (30) am Entladeende der Batteriegruppe (20) übereinander geschichtet sind und die in einer der mehreren Verstärkungsschichten (30) definierten Durchgangsöffnungen (32) mit den in einer anderen der mehreren Verstärkungsschichten (30) definierten Durchgangsöffnungen (32) in Verbindung stehen.

10. Das Batteriepack gemäß Anspruch 9, wobei jede in einer der mehreren Verstärkungsschichten (30) definierte Durchgangsöffnung (32) jeweils mit einer der in einer anderen der mehreren Verstärkungsschichten (30) definierten Durchgangsöffnungen (32) fluchtet.

11. Das Batteriepack gemäß Anspruch 9, das ferner ein Verbindungselement (60) umfasst, wobei das Verbindungselement (60) die mehreren Verstärkungsschichten (30) miteinander verbindet.

12. Das Batteriepack gemäß einem der Ansprüche 1 bis 11, wobei der Fixierklebstoff (40) aus Styrofoam hergestellt ist.

13. Das Batteriepack gemäß einem der Ansprüche 1 bis 11, wobei das Außengehäuse (10) ein Gehäuse (14) und eine obere Abdeckung (50) umfasst, die obere Abdeckung (50) und das Gehäuse (14) miteinander verbunden sind, um gemeinsam den Aufnahmehohlraum (12) zu bilden, und die Verstärkungsschicht (30) zwischen der Batteriegruppe (20) und der oberen Abdeckung (50) angeordnet ist.

## Revendications

1. Un bloc-batterie, comprenant :
un boîtier extérieur (10), définissant une cavité de réception (12) ;
un groupe de batteries (20), reçu dans la cavité de réception (12) ;
au moins une couche de renforcement (30), disposée à une extrémité de décharge du groupe de batteries (20), dans lequel ladite au moins une couche de renforcement (30) définit une pluralité d'orifices de passage (32) ; et
un adhésif de fixation (40), remplissant la cavité de réception (12), dans lequel l'adhésif de fixation (40) enveloppe la couche de renforcement (30) et le groupe de batteries (20).

2. Le bloc-batterie selon la revendication 1, dans lequel chaque couche de renforcement (30) parmi ladite au moins une couche de renforcement (30) comprend au moins l'un des éléments suivants : un tissu de fibres de verre, un tissu de fibres de carbone et un tissu d'aramide.

3. Le bloc-batterie selon la revendication 2, dans lequel, lorsque chaque couche de renforcement (30) parmi ladite au moins une couche de renforcement (30) comprend le tissu de fibres de verre, l'adhésif de fixation (40) atteint une face du tissu de fibres de verre tournée vers le groupe de batteries (20).

4. Le bloc-batterie selon la revendication 3, dans lequel l'adhésif de fixation (40) enveloppe la totalité du tissu de fibres de verre et fixe le tissu de fibres de verre au groupe de batteries (20).

5. Le bloc-batterie selon la revendication 1, dans lequel chaque couche de renforcement (30) parmi ladite au moins une couche de renforcement (30) comprend une pluralité de portions latérales (31) et une pluralité de portions verticales (33), la pluralité de portions latérales (31) et la pluralité de portions verticales (33) se croisent entre elles, et deux portions latérales (31) adjacentes de la pluralité de portions latérales (31) et deux portions verticales (33) adjacentes correspondantes de la pluralité de portions verticales (33) définissent conjointement un orifice de passage (32) respectif de la pluralité d'orifices de passage (32).

6. Le bloc-batterie selon la revendication 5, dans lequel chaque portion latérale (31) de la pluralité de portions latérales (31) est perpendiculaire à chaque portion verticale (33) de la pluralité de portions verticales (33).

7. Le bloc-batterie selon la revendication 5, dans lequel une largeur de chaque orifice de passage (32) de la pluralité d'orifices de passage (32) est de L mm, et L ≥ 1.

8. Le bloc-batterie selon la revendication 1, dans lequel une épaisseur de la couche de renforcement (30) est de T millimètres, et 1 ≤ T ≤ 2.

9. Le bloc-batterie selon la revendication 8, dans lequel le nombre de couches de renforcement (30) est supérieur à un, les couches de renforcement (30) sont superposées à l'extrémité de décharge du groupe de batteries (20), et les orifices de passage (32) définis dans l'une des couches de renforcement (30) sont en communication avec les orifices de passage (32) définis dans une autre couche de la pluralité de couches de renforcement (30).

10. Le bloc-batterie selon la revendication 9, dans lequel chaque orifice de passage (32) défini dans l'une des couches de renforcement (30) est aligné avec un orifice de passage (32) correspondant parmi les orifices de passage (32) définis dans une autre couche de la pluralité de couches de renforcement (30).

11. Le bloc-batterie selon la revendication 9, comprenant en outre un élément de liaison (60), dans lequel l'élément de liaison (60) relie les couches de renforcement (30) les unes aux autres.

12. Le bloc-batterie selon l'une quelconque des revendications 1 à 11, dans lequel l'adhésif de fixation (40) est constitué de Styrofoam.

13. Le bloc-batterie selon l'une quelconque des revendications 1 à 11, dans lequel le boîtier extérieur (10) comprend un boîtier (14) et un couvercle supérieur (50), le couvercle supérieur (50) et le boîtier (14) sont reliés l'un à l'autre pour former conjointement la cavité de réception (12), et la couche de renforcement (30) est disposée entre le groupe de batteries (20) et le couvercle supérieur (50).
